# EUROPEAN PATENT APPLICATION

(11) **EP 4 737 313 A1**
(43) Date of publication of application: **06.05.2026**
(21) Application number: 25204710.5
(22) Date of filing: 25.09.2025
(51) Int. Cl.: B64D 11/02, B64D 11/04, B64D 13/08, B64D 15/12

(54) **AIRCRAFT SECTION AND AIRCRAFT COMPRISING A FREEZING PROTECTION FOR A WATER LINE**

(30) Priority: 29.10.2024 DE 102024003556
(71) Applicant: AIRBUS Operations GmbH, 21129 Hamburg (DE)
(72) Inventor: Ohlfest, Carsten, 21129 Hamburg (DE); Albers, Frederik, 21129 Hamburg (DE); Wenderoth, Stefan, 21129 Hamburg (DE)
(74) Representative: Schornack, Oliver

(57) **Abstract**

The present disclosure relates to an aircraft section (10) and aircraft (1) having a monument (50) and a water supply line (110) with a heating element (120) as freezing protection in a space overlapping with frames (3) of the aircraft.

## Description

The present disclosure generally relates to an aircraft section and aircraft having a water supply line with a freezing protection. Particularly, the present disclosure relates to an aircraft section and aircraft having a monument and a water supply line with a heating element, wherein the water supply line is installed in a space close to frames of the primary structure of the aircraft that is at risk of freezing.

A conventional water supply system in an aircraft is installed in a manner that it can be drained by gravity. This makes the installation route of the water lines and ducts complex and the installation cumbersome. In order to avoid freezing of such water lines and ducts, an additional electric ice protection system can be provided, which has to be routed in the same way as the water lines, which makes the installation work even more complex.

A further water supply system comprises flexible hoses with smaller diameters and operates at a higher pressure. The hoses can be drained pneumatically due to the smaller diameter, which allows less complex installation routes and easier installation in the aircraft.

Nevertheless, even the flexible hoses may be arranged in areas of the aircraft that are at risk of freezing, either during flight operation of the aircraft or during phases where the aircraft is on ground in a cold environment.

It is therefore an object of the present disclosure to provide an improved water supply system, particularly a water supply system with improved operational availability and with a reduced risk of damage due to freezing.

This object is solved by the present invention as defined in the independent claims. Preferred embodiments are defined by the dependent claims.

According to a first aspect to better understand the present disclosure, an aircraft section comprises at least a section of a frame arranged in a circumferential direction of the aircraft section, at least a section of a cabin floor coupled to the frame, a monument having a water consumer, and a water supply line fluidly connected to the water consumer and configured to supply water to the water consumer. For instance, such monument can be a lavatory, a galley, a separating wall with water dispenser or similar water consumer, or the like.

The water supply line is installed in a space overlapping with the frame (when viewing) in a longitudinal direction of the aircraft section. The aircraft section further comprises a heating element configured to heat the water supply line in the space overlapping with the frame.

In other words, the water supply line is at least partially arranged in a space or region of the aircraft section that is close to an outer skin of the aircraft, which is regularly mounted onto the frames of the aircraft fuselage. During flight or on ground in a freezing environment, a region close to the outer skin is at risk of freezing. The heating element is only provided in this region. Thus, it is possible to arrange the water supply line in areas of the aircraft section, where it is not in the way for installation or arrangement of other components. At the same time, the water supply line can be prevented from damage, as the heating element is provided in a section (or one or more sections) that are at risk of freezing.

As a mere example, installing the water supply line in the space overlapping with the frame in a longitudinal direction allows "hiding" the water supply line in the structure of the aircraft, i.e. the frame region.

In an implementation variant, the water supply line can be installed in a space underneath the cabin floor, and the heating element can further be configured to heat a portion of the water supply line arranged in the space underneath the cabin floor. Specifically, since the cabin floor is mounted to the frames or to a structure close to the frames, the space underneath the cabin floor is also at risk of freezing, at least a portion of this space is at risk of freezing. Nevertheless, the heating element may be provided in the entire region at risk of freezing, which covers some of the space between the frames as well as the space, for example, between floor beams.

It is to be noted that "underneath the cabin floor" is to be understood as including a space delimited by beams carrying the cabin floor, and not necessarily a space underneath such beams. "Underneath the cabin floor", hence, is to be understood as including any space underneath the actual floor panels (e.g., arranged on top of beams). In any case, the cargo area may be free for cargo, since the water supply line is not arranged in the space dedicated for cargo and other goods. Thus, the water supply line can be "hidden" in the cargo floor.

It is to be understood that the water supply line with the heating element can be arranged in any other area that is at risk of freezing.

In an implementation variant, the water supply line can be a conventional water pipe made from stainless steel or titanium, such as water pipes of a diameter between ½ inch and ¾ inch (i.e., 1.27 cm to 1.905 cm). Such conventional water pipe can be employed in a water supply system operating at a pressure optimised for the water consumer(s).

In an implementation variant, the water supply line can be a flexible hose of a plastic material. as a mere example, the hose can be made from a multi-layer fabric, that may further include a plastic material. Such flexible hose can have a smaller diameter, i.e., less than½ inch (<1.27 cm), for example, between 6 to 12 mm. The flexible hose can be employed in a water supply system operating under a pressure higher than required for the water consumer(s), such as a system operating between 2.7 bar and 50 bar.

The flexible hose further allows compensating any tolerances, such as assembly tolerances, since the water supply line can be installed with different radii or can be bend, pulled, pushed, et cetera within the installation space.

In addition, such flexible hose further allows installing water consumers flexibly within the aircraft, during final assembly of the aircraft as well as during a retrofit or change of the cabin layout. The flexible hose allows installing a water supply line (with heating element) with a length corresponding to the maximum length required for a water consumer having the largest distance to a particular installation space. Due to the flexibility of the hose, it can be installed in a straight manner to reach the water consumer of maximum distance, as well as in any other waterline layout, in order to be stored away for water consumers closer to the installation space. As a mere example, the flexible hose can be chosen in a length to reach any monument along a longitudinal direction of the aircraft in a section of the aircraft where monuments with water consumers can be flexibly installed.

Alternatively, flexible hoses of different lengths may be provided, so that during final assembly of the aircraft as well as during a retrofit or change of the cabin layout, the flexible hose can be exchanged with one of a different length, in order to have always a water supply line of optimum length.

It is to be understood that such different installation manners may also involve a heating element, and/or a heated water hose.

In an implementation variant, the heating element can be a heated water supply hose fluidly coupled to the water supply line and arranged in the space overlapping with the frame and, optionally, further arranged in the space underneath the cabin floor. In other words, the heated water supply hose can replace a regular water supply hose or line without heating element. Thus, while the heating element could be an additional component supplemented to a regular water supply hose, in this implementation variant, a water supply hose can have an integrated heating element.

In an implementation variant, the heating element can be an electrical heating element having an electrical connector. Thus, the heating element can simply be provided with power by connecting the electrical connector to a power supply.

In an implementation variant, the aircraft section can further comprise a power supply line configured to provide electrical power to the monument, wherein the electrical connector of the heating element is electrically connected to the power supply. Thus, the power required for the heating element can simply be provided from a power source that is already present, i.e. the power supply line for the monument.

In an implementation variant, the electrical connector is arranged in the monument. This facilitates installation and assembly of the water supply and heating element, since the electrical connector can easily be reached at the end of the water supply line in the monument, i.e. a place where the water supply line is connected to a water consumer and where a power supply of the monument is already present. No work has to be performed underneath the cabin floor, particularly in the triangular area between frames and cabin floor in the cargo area, which is regularly used for supply lines and connections.

In an implementation variant, the aircraft section can further comprise at least a section of a main water line, wherein the water supply line is fluidly connected to the main water line. Such main water line may have a larger diameter than the water supply line for the monument, but is not restricted to such diameter. In other words, the diameter of both water lines can be the same, so that the same water supply hose can be used.

In an implementation variant, the main water line can be installed in the space underneath the cabin floor. Particularly, the main water line can run underneath the actual floor panels, such as a space between floor beams. For instance, the floor beams can include through holes, through which the main water line runs. As a mere example, the main water line can be installed along a longitudinal direction of the aircraft, for example, extending along the entire aircraft (or almost the entire aircraft, as a head and tail region of the aircraft may not require a water supply).

In an implementation variant, the aircraft section can further comprise a temperature sensor arranged in the space overlapping with the frame, and preferably arranged adjacent to the water supply line. Thus, the temperature in the area at risk of freezing can be monitored.

In an implementation variant, the aircraft section can further comprise a controller configured to control operation of the heating element. For instance, the controller can be configured to activate the heating element, i.e. to warm or heat the water supply line, when the water supply line is at risk of freezing.

As a mere example, the controller can operate on a timely basis. For instance, the controller may activate the heating element during flight phases or depending on a switch or signal of an aircraft control indicating that the aircraft is in a cold environment. For example, a crew member or cockpit member can switch on the heating element via the controller, in order to avoid any damage to the water supply line.

In an implementation variant, the controller may further be configured to control operation of the heating element based on a temperature signal received from the temperature sensor. Thus, automatic freezing prevention control can be performed.

In an implementation variant, the controller can further be configured to monitor the operation of the heating element. Thus, in case the heating element does not function, although the water supply line is at risk of freezing, a warning signal can be output. Such warning signal, for example, can be received at a more general monitoring or surveillance system of the aircraft, so that personal may be made aware of the non-functioning of the heating element.

Furthermore, the controller may also be configured to test the heating element, for example, before a flight of the aircraft or the like.

In an implementation variant, the aircraft section can further comprise a thermostat configured to activate the heating element based on a pre-set temperature. As a mere example, the thermostat may be pre-set to 0°, 1° or 2°C (or any value within the range between 0° and 5°) and activates the heating element if the temperature reaches for drafts below this temperature. For instance, the thermostat may include an electric switch that is closed at the pre-set temperature.

In an implementation variant, the heating element is configured to heat the water supply line to a temperature above the freezing temperature. Thus, in a normal environment, the heating element can be configured to heat the water supply line to a temperature above 0°C. As mere examples, the heating element can be configured to heat the water supply line to a temperature between 1°C and 10°C, preferably between 2°C and 10°C, most preferably between 4°C and 8°C, such as 4°C or 5°C. It is sufficient to prevent the water supply line from freezing, in order to avoid any damage, while the water itself is not to be heated, so that the heating element can be operated in an energy efficient manner.

In an implementation variant, the aircraft section can comprise a plurality of monuments, each having at least one water consumer. The water supply line can further be installed in a manner connecting one monument with an adjacent monument, wherein the heating element may heat several sections of the water supply line in the space overlapping with the frame. For instance, the water supply line may branch off in a first monument and/or in the space overlapping with the frame, so that one branch is connected to the water consumer of the first monument, and another branch is installed up to or into a second monument. The water supply line, hence, can include further sections (branches) that are arranged in regions at risk of freezing. All these sections (branches) may be heated by the heating element.

This allows connecting a plurality of monuments with a water supply line without requiring any changes or adaptations of the remaining aircraft installation, such as interior components of the aircraft.

According to a second aspect to better understand the present disclosure, an aircraft comprises at least one aircraft section according to the first aspect or one or more of its variants.

In an implementation variant, the aircraft can comprise several aircraft sections, each of which has one or more water supply lines connecting one or more monuments with a main water line that runs through the aircraft in the longitudinal direction of the aircraft.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a side view of an aircraft including a water supply system and several aircraft sections;
- Figure 2: schematically illustrates a cross-section of an aircraft section having a water supply;
- Figure 3: schematically illustrates a plan view of an aircraft section having a water supply; and
- Figure 4: schematically illustrates a plan view of an aircraft section having several monuments.

In the following description, for purposes of explanation and not limitation, specific details are set forth in order to provide a thorough understanding of the present disclosure. It will be apparent to one skilled in the art that the present disclosure may be practiced in other implementations that depart from these specific details.

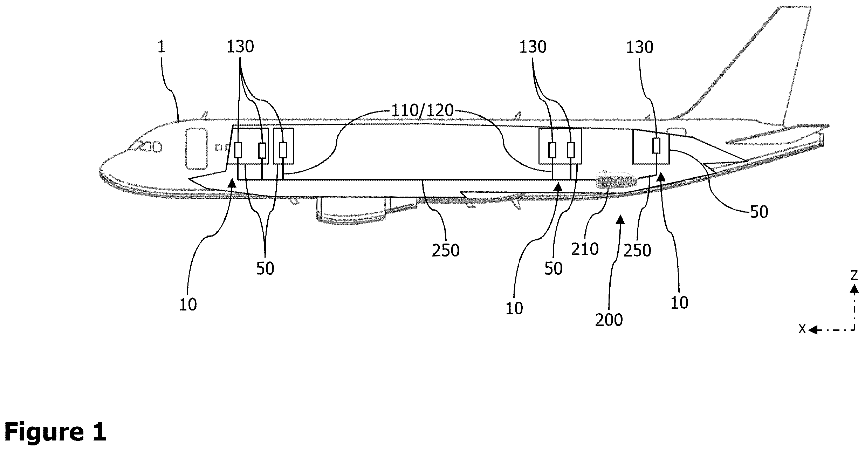

Figure 1 schematically illustrates a side view of an aircraft 1 that is partially cut open. In the interior of the aircraft 1 there is shown schematically a water supply system 200 and several aircraft sections 10. The water supply system 200 includes a central water tank 210 and at least one main water line 250. For instance, as illustrated in Figure 1, there is a first main water line 250 running to the front of the aircraft, while a second main water line 250 runs towards the back (aft) of the aircraft. It is to be understood that the number of main water lines 250 depends on the location of the central water tank 210 and the location of the aircraft sections 10 requiring a water supply.

Each aircraft section 10 comprises at least one monument 50 having at least one water consumer 130. In other words, the present disclosure is not limited to a specific number of monuments 50 per aircraft section 10 nor a specific number of water consumers 130 per monument 50 and/or per aircraft section 10.

While Figure 1 illustrates the monuments 50 as cubicle components, it is to be understood that a monument 50 can have any shape and dimensions. As a mere example, while a galley and a lavatory regularly have a three-dimensional corpus with certain inner volume, a separation wall or stand or mount, for example, for a water dispenser or water fountain (not illustrated), has a substantially two-dimensional corpus, such a wall or post.

One or more water consumers 130 are connected to the main water line 250 by a water supply line 110. Only some of the water supply lines 110 are provided with reference signs for sake of clarity of Figure 1. It is to be understood that several water consumers 130 may be connected with branches of water supply lines 110 (not illustrated), i.e. one or more water supply lines 110 branching off from another water supply line 110, wherein a root water supply line 110 is fluidly coupled to the main water line 250.

The water consumer 130 can be a (pressure less) buffer tank, water dispenser, toilet, faucet, coffeemaker, beverage maker, and the like or several of such devices. Thus, the illustrated water consumer 130 in general is a device or group of devices related to the monument 50 that require a water supply.

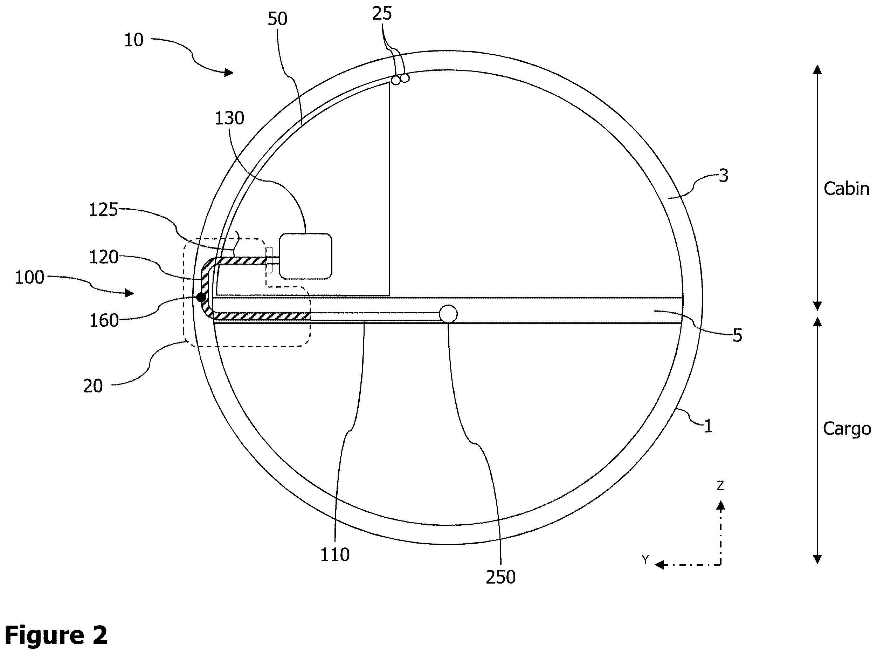

Figure 2 schematically illustrates a cross-section of an aircraft section 10 having a water supply. The aircraft section 10 comprises at least a section of a frame 3 which is arranged in a circumferential direction of the aircraft section 10 as well as a circumferential direction of the aircraft 1. A cabin floor 5 or at least a section thereof is also provided in the aircraft section 10. Thus, the aircraft section 10 does not has to cover the entire frame 3 nor is it restricted to a specific portion of the frame 3.

The water supply line 110 is installed in a space underneath the cabin floor 5. It is to be understood that the space underneath the cabin floor 5 comprises any area underneath a floor panel (the upper surface of the cabin floor 5 illustrated in Figure 2). Thus, the space underneath the cabin floor 5 is to be understood as including a space between floor beams, which can be understood as beams running in the cross-sectional direction (Y-axis) of the aircraft 1 (in the drawing plane of Figure 2) and which extend from the top surface of the cabin floor 5 to the bottom surface of the cabin floor 5 illustrated as the lower line of the cabin floor 5 in Figure 2.

The water supply line 110 can be fluidly coupled to the main water line 250, which can likewise be arranged underneath the cabin floor 5. As a mere example and as illustrated in Figure 2, the main water line 250 can be arranged underneath the floor panels and can run through openings (not explicitly illustrated) in the floor beams.

In any case, the water supply line 110 fluidly coupled to and branching off the main water line 250 fluidly couples the main water line 250 with a water consumer 130 arranged in or at the monument 50. The water supply line 110 is also installed in a space overlapping with the frame(s) 3 in the longitudinal direction (X-axis) of the aircraft section 10.

Figure 2 illustrates an area 20 that is at risk of freezing, since it is close to the outer skin (not explicitly illustrated) of the aircraft 1. As a mere example, the space underneath the cabin floor 5, i.e. a region close to or in the cargo area, may be at a higher risk of freezing than a space in the monument, i.e. a region in the cabin area. This is due to the normally heated cabin area, while a cargo area may not be heated all the times. For instance, during loading/unloading cargo and luggage the cargo door (not illustrated) may be open, while a cabin area is already heated for passengers. In a cold environment, the cargo area, hence, may be much colder than the cabin area.

The aircraft section 10 further includes a heating element 120 configured to heat the water supply line 110 in the space overlapping with the frame 3. Thus, the heating element 120 could only be arranged in the space overlapping with the frame 3. On the other hand, the heating element 120 could be arranged along the water supply line 110 intersecting the entire area 20 that is at risk of freezing. Thus, the heating element can further be configured to heat a portion of the water supply line arranged in the space underneath the cabin floor 5.

As a mere example, the area 20 that is at risk of freezing may have a cross-sectional extent (in the Y-axis direction) from the outer skin towards the centre of the aircraft 1 of 10 to 100 cm, preferably of 10 to 60 cm.

While the heating element 120 can be a component supplemented to the water supply line 110, it is to be understood that the heating element 120 can also be a heated water supply hose fluidly coupled to the water supply line 110 and arranged (only) in the area 20 at risk of freezing. Such heated water supply hose 120 can have an integrated heating element. As a mere example, a heating element can be integrated into a plastic hose, in order to heat the plastic hose directly, thereby forming the heated water supply hose.

The heating element 120 can be an electrical heating element having an electrical connector 125. Instead of an electrical heating element, the heating element 120 can be a fluid duct through which a heated fluid (such as heated air or a heated liquid) can be guided. Such fluid duct can be arranged adjacent to the water supply line 110, or can surround the water supply line 110.

In case of an electrical heating element, power can be supplied from a power supply line 25 that is configured to provide electrical power to the monument 50. Such power supply line 25 can be any power and/or data line running through the aircraft 1. As a mere example, a monument often requires electrical power, in order to operate lights, galley inserts, displays or other electrical components. Thus, a monument 50 is often already equipped with an electrical power supply or electrical power lines.

The electrical connector 125 of the heating element 120, hence, can be arranged in the monument, so that it can be easily connected to any electrical power line in the monument 50. Alternatively, an electrical power line is to be installed in/through the monument 50 to connect the electrical connector 125 to the power supply line 25 of the aircraft 1.

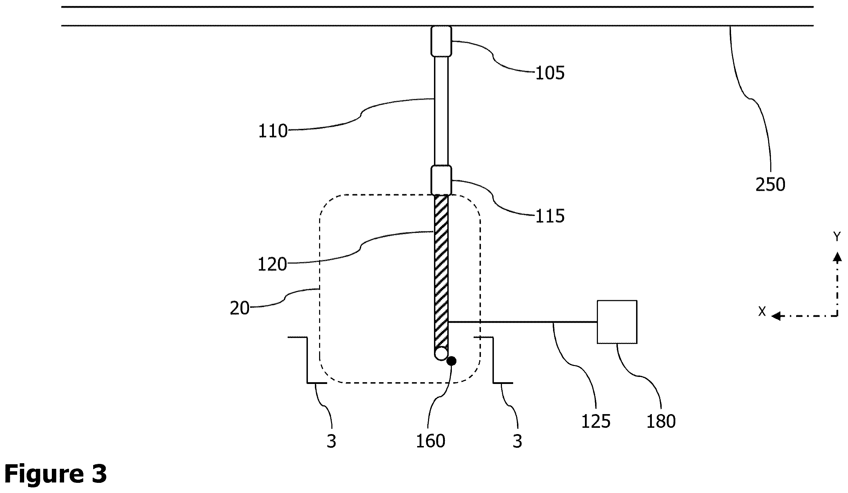

The aircraft section 10 can further comprise a temperature sensor 160 arranged in the space overlapping with the frame 3. With additional reference to Figure 3 schematically illustrating a plan view of an aircraft section 10 having a water supply, such as the aircraft section 10 of Figure 2, the space between the frames 3 is close to an outer skin (not illustrated) of the aircraft 1. This area 20 is at risk of freezing. In Figure 3, the area 20 is illustrated as a substantially rectangular area delimited in the longitudinal direction (X-axis). It is, however, to be understood that the area 20 continues in the longitudinal direction from the front to aft of the aircraft 1 along the entire outer skin and frames 3.

In any case, the temperature sensor 160 can be configured to measure a temperature in the area 20, and particularly adjacent to the water supply line 110 (or the heated water supply hose 120) in this area 20. As a mere example, the temperature sensor 160 can be adhered to the water supply line 110 (or heated water supply hose 120), in order to measure a temperature of the water line.

A controller 180 can be provided that is configured to control the operation of the heating element 120. As a mere example, the controller 180 can be connected to the temperature sensor 160, so that the controller 180 can analyse and/or react based on a signal from the temperature sensor 160. In case the temperature to the water supply line 110 falls below a threshold value, the controller 180 can activate the heating element 120. As a mere example, the electrical connector 125 can be connected to the controller 180 or a switch controlled by the controller 180. Thus, the heating element 120 can be operated, only when the temperature is below the temperature threshold value.

It is to be understood that instead of a separate controller 180, the temperature sensor 160 can be implemented as a temperature controlled switch connected to the electrical connector 125. Furthermore, a microcontroller (not illustrated) can be integrated into the water supply line 110 and/or heating element 120. Such microcontroller can be configured to control activation/deactivation of the heating element 120, and can further be configured to monitor the temperature of the water supply line 110 as well as the functioning of the heating element 120. The microcontroller can further be configured to receive and transmit data, in order to facilitate controlling of the heating element 120 as well as providing information about the water supply line 110 and/or the operation of the heating element 120.

Figure 3 further schematically illustrates fittings 105, 115 (or fluid line couplings). Such fittings 105, 115 can be employed, to connect the water supply line 110 to the main water line 250 as well as the water supply line 110 to a heated water supply hose 120. Thus, the fitting 115 is superfluous, if the heating element 120 is supplemented to the water supply line 110 in the area 20 that is at risk of freezing.

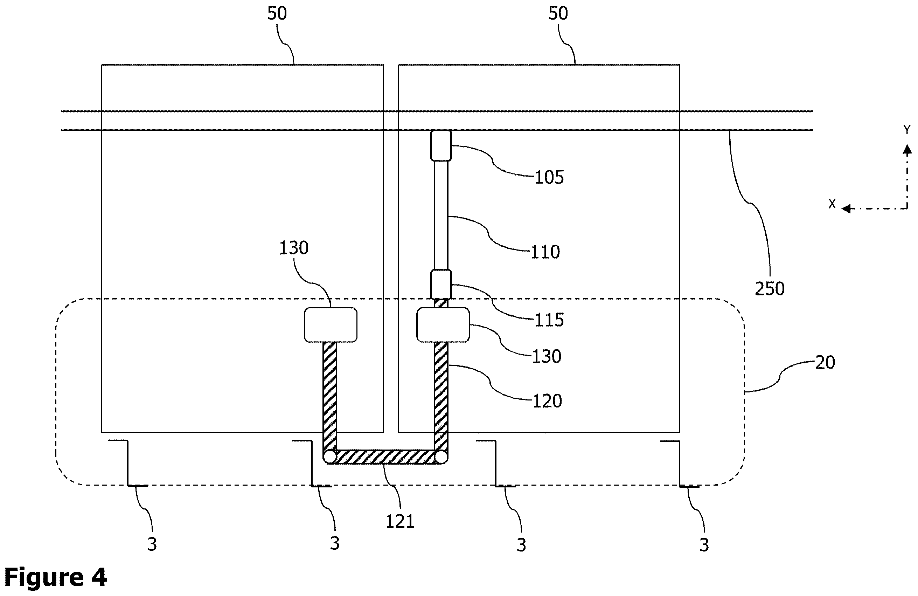

Figure 4 schematically illustrates a plan view of another exemplary aircraft section 10 having a water supply. It is to be understood that details and components illustrated in Figure 3 and described with respect to Figure 3 may likewise be employed/installed in the aircraft section 10 illustrated in Figure 4, but may have been omitted for sake of clarity and brevity of Figure 4. The aircraft section 10 of Figure 4 further shows monuments 50, particularly two monuments 50 exemplarily representing a plurality of monuments 50 that can be arranged in the aircraft 1.

The water supply line 110 and heating element 120 allows installation of water supply lines 110 throughout the aircraft 1 in a space-saving manner and without interfering with other installations in the aircraft 1. Thus, instead of a separate water supply line 110 branching off the main water line 250 for a second monument 50, a branch 121 of the water supply line 110/120 can be provided between two monuments 50. In other words, while the right monument in Figure 4 is connected to the main water line 250 in the same manner as illustrated in Figures 2 and 3, the last monument in Figure 4 is connected to the water supply line 110/120 of the first monument 50) to the right in Figure 4).

The branch-off point of the water supply line 110/120 can be located in the area 20 that is at risk of freezing. The heating element 120 or the heated hose may then also be provided to this water supply line 110 branching-off to the second monument, particularly the water consumer 130 in the second monument. As can be derived from Figures 2 and 4, the installation of a water supply to monuments can be provided in the space overlapping with the frames 3, so that the water supply line 110/120 is hidden and does not interfere with other components of the aircraft 1.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft section (10), comprising:
at least a section of a frame (3) arranged in a circumferential direction of the aircraft section;
at least a section of a cabin floor (5) coupled to the frame (3);
a monument (50) having a water consumer (130); and
a water supply line (110) fluidly connected to the water consumer (130) and configured to supply water to the water consumer,
**characterised in that**
the water supply line (110) is installed in a space overlapping with the frame (3) in a longitudinal direction of the aircraft section, and
the aircraft section further comprises:
a heating element (120) configured to heat the water supply line (110) in the space overlapping with the frame (3).

2. The aircraft section (10) of claim 1, wherein the water supply line (110) is further installed in a space underneath the cabin floor (5), and wherein the heating element (120) is further configured to heat a portion of the water supply line (110) arranged in the space underneath the cabin floor (5).

3. The aircraft section (10) of claim 1 or 2, wherein the heating element (120) is a heated water supply hose fluidly coupled to the water supply line (110) and arranged in the space overlapping with the frame (3) and, preferably, further arranged in the space underneath the cabin floor (5).

4. The aircraft section (10) of one of claims 1 to 3, wherein the heating element (120) is an electrical heating element having an electrical connector (125).

5. The aircraft section (10) of claim 4, further comprising:
a power supply line (25) configured to provide electrical power to the monument (50),
wherein the electrical connector (125) of the heating element (120) is electrically connected to the power supply (25),
wherein, preferably, the electrical connector (125) is arranged in the monument (50).

6. The aircraft section (10) of one of claims 1 to 5, further comprising:
at least a section of a main water line (250),
wherein the water supply line (110) is fluidly connected to the main water line (250).

7. The aircraft section (10) of claim 6, wherein the main water line (250) is installed in the space underneath the cabin floor (5).

8. The aircraft section (10) of one of claims 1 to 7, further comprising:
a temperature sensor (160) arranged in the space overlapping with the frame (3), and preferably arranged adjacent to the water supply line (110); and/or
a controller (180) configured to control operation of the heating element (120), preferably based on a temperature signal received from the temperature sensor (160).

9. An aircraft (1), comprising:
at least one aircraft section (10) of one of claims 1 to 8.
